# EUROPEAN PATENT APPLICATION

(11) **EP 3 754 059 A1**
(43) Date of publication of application: **23.12.2020**
(21) Application number: 19180477.2
(22) Date of filing: 17.06.2019
(51) Int. Cl.: D01H 4/10

(54) **DIVIDED HOUSING WITH A ROTOR ASSEMBLY OF A ROTOR SPINNING MACHINE AND METHOD FOR INSTALLING A ROTOR ASSEMBLY IN A HOUSING OF A ROTOR SPINNING MACHINE**

(71) Applicant: Saurer Czech s.r.o., 547 01 Náchod (CZ); Saurer Technologies GmbH & Co. KG, 47804 Krefeld (DE)
(72) Inventor: Kohl, Ondrej, 549 46 Zábrodí (CZ); Teiner, Petr, 549 5 Police nad Metují (CZ); Wehner, Andreas, 36163 Poppenhausen (DE); Zeitz, Günter, 97762 Hammelburg (DE)
(74) Representative: Morgenthum-Neurode, Mirko

(57) **Abstract**

The invention relates to a divided housing with a rotor assembly of a rotor spinning machine as well as a method for installing a rotor assembly in a housing of a rotor spinning machine. To propose a housing with a rotor assembly of a rotor spinning machine which allows a particular precise adjustment of the spinning rotor position, in particular in an axial direction of the rotor shaft, and which significantly reduces the forces due to vibrations or imbalances and accordingly reduces the wear of the rotating parts and in particular the rotor shaft bearing substantially, the divided housing with a rotor assembly has a rotor assembly comprising a spinning rotor, a rotor shaft and at least one rotor shaft bearing, and the housing comprises a rotor section and a bearing section, the rotor section surrounding the spinning rotor and the bearing section enclosing at least a part of the rotor shaft as well as at least one rotor shaft bearing, wherein in the bearing section the housing is at least partially divided parallel to a longitudinal housing axis into two separate parts, the first part being a housing body extending over the rotor section as well as the bearing section and the second part being a housing cap closing an open part of the housing body in the bearing section.

## Description

The invention relates to a divided housing with a rotor assembly of a rotor spinning machine as well as a method for installing a rotor assembly in a housing of a rotor spinning machine. Additionally, the invention relates to a rotor spinning machine with a divided housing.

Rotor assemblies comprising a spinning rotor connected to a rotor shaft are widely used in spinning machines, in particular in open-end rotor spinning machines. Such open-end rotor spinning machines are typically operated at speeds of 100,000 rpm and above. Accordingly, the rotor shaft has to be firmly mounted to the spinning machine and in particular to a housing thereof.

Typically, roller bearing arrangements are used to rotatably mount the rotor shaft to the housing of the rotor spinning machine. To dampen vibrations as well as to reduce the high dynamic forces occurring during the spinning operation as far as possible, usually a damping device is arranged between the roller bearing arrangement and the housing of the spinning rotor machine.

An example of such a roller bearing arrangement for a spinning rotor of an open-end rotor spinning machine is described in DE 33 14 547 A1. The roller bearing arrangement comprises a damping device having a bearing sleeve mounted slidably relative to a bearing housing of the roller bearing arrangement. On the bearing sleeve a damping element is arranged, which consists of an inner and an outer bearing ring with a rubber element vulcanized between the bearing rings.

The rotor assemblies known from the prior art are inserted into an opening of a housing of a rotor spinning machine and are firmly mounted by form-fit as well as screws. However, a precise positioning of the spinning rotor as well as of the rotor shaft to the housing via the bearing arrangements as well as via the damping devices is almost impossible in such rotor spinning machines, in particular in an axial direction of the rotor shaft. Additionally, fixing the rotor assembly with only a few screws to a housing leads to an uneven transmission of forces from the rotating rotor assembly to the housing and may further lead to an unbalanced rotation of the spinning rotor which results in vibrations and accordingly in a strong wear of the rotor spinning machine.

It may be considered a first object of the present invention to propose a housing with a rotor assembly of a rotor spinning machine which allows a particular precise adjustment of the spinning rotor position, in particular in an axial direction of the rotor shaft.

It may be considered another object of the present invention to provide a housing with a rotor assembly of a rotor spinning machine which significantly reduces the forces due to vibrations or imbalances and which accordingly reduces the wear of the rotating parts and in particular of the rotor shaft bearing substantially.

A further objective of the invention may be to propose a housing with a rotor assembly of a rotor spinning machine which allows for a better transmission of forces between the spinning rotor or the spinning rotor shaft and the housing of the rotor spinning machine.

It might be finally considered an objective of the present invention to propose a rotor assembly of a rotor spinning machine which is safer to operate than rotor assemblies of the prior art.

These and further objectives may be achieved by a divided housing for a rotor assembly of a rotor spinning machine according to claim 1, a method for installing a rotor assembly in a housing of a rotor spinning machine according to claim 12 or a rotor spinning machine according to claim 12. Dependent claims refer to preferred embodiments of the invention.

The divided housing with a rotor assembly of a rotor spinning machine according to the invention has a rotor assembly with at least a spinning rotor, a rotor shaft and at least one rotor shaft bearing. The housing comprises a rotor section and a bearing section, wherein the rotor section at least partially surrounds the spinning rotor and the bearing section encloses at least a part of the rotor shaft as well as at least one rotor shaft bearing. In the bearing section, the housing is at least partially divided along or parallel to a longitudinal housing axis into two separate parts, wherein the first part forms a housing body and extends over the rotor section as well as the bearing section and wherein the second part forms a housing cap and is provided to close an open part of the housing body in the bearing section.

The invention also relates to a method for installing a rotor assembly in a housing of a rotor spinning machine, wherein the rotor assembly comprises at least a spinning rotor, a rotor shaft and at least one rotor shaft bearing and wherein the housing comprises a rotor section and a bearing section, the rotor section surrounding the spinning rotor and the bearing section enclosing at least a part of the rotor shaft as well as at least one rotor shaft bearing. To install the rotor assembly in the housing, first the housing is opened by removing a housing cap from a housing body, wherein the housing cap is at least partially dividing the housing in the bearing section along or parallel to a longitudinal housing axis into two separate parts, wherein preferably the first part is a housing body extending over the rotor section as well as the bearing section and/or wherein the second part is the housing cap closing an open part of the housing body in the bearing section. Afterwards, the rotor assembly is inserted into the opened housing in an axial direction of an installed rotor shaft of the rotor assembly and finally, the housing cap is closed, press-fitting the rotor assembly in the bearing section of the housing between the housing body and the housing cap.

The invention finally also relates to a rotor spinning machine with at least one, preferably many, in particular identical spinboxes each comprising a divided housing according to the invention.

The inventors have realized that due to the high number of revolutions per minute of the spinning rotor and of the rotor shaft and the corresponding forces involved, a particular precise adjustment of the spinning rotor position, in particular in an axial direction of the rotor shaft, is necessary to significantly reduce the wear of the spinning rotor assembly and to ensure safe operation of the rotor spinning machine.

The inventors have further recognized that a particularly strong mounting is possible as well as an optimal transmission of forces between a rotor assembly and a housing can be achieved when the rotor assembly, more precisely at least one rotor shaft bearing and in particular a resilient mounting element of the at least one rotor shaft bearing, has a larger diameter than the housing and therefore the rotor assembly is mounted in the housing under pressure and/or with a press-fit connection. However, with such an arrangement of the rotor assembly, it is not possible to insert the rotor assembly into a housing built in one part and accordingly the inventors came to the invention to provide a two-divided housing.

The rotor spinning machine might be any machine for processing fiber material or roving into workable yarn or thread by a spinning rotor. The rotor spinning machine might comprise only one single rotor, in particular arranged in a spinning box. Preferably, the spinning machine comprises several spinning rotors and in particular several identical spinning boxes each comprising one spinning rotor. The spinning machine can comprise further optional components, in particular provided for processing the fiber material or the roving before spinning and/or the yarn or the thread after spinning.

To be able to process the fiber material or the roving, a rotor assembly is provided, in particular to allow for a rotation of the spinning rotor with high rotational speed. The rotor assembly according to the invention at least comprises a spinning rotor, a rotor shaft and at least one rotor shaft bearing. The rotor assembly might also comprise further parts such as a belt roller for transmission of the rotor shaft by a drive belt or at least one resilient mounting element for damping vibrations between the rotor shaft bearing and the housing.

The spinning rotor of the rotor spinning machine is a component or an assembly for processing fiber material or roving into workable yarn or thread and is in particular a spinning rotor of an open-end spinning machine. Preferably the spinning rotor is a rotor cup, which is more preferably build as one part and/or out of metal. Advantageously, the spinning rotor is a rotational-symmetric component to avoid imbalances during rotation. Such a spinning rotor might spin with more than 100,000 revolutions per minute and even up to 200,000 revolutions per minute during regular operation. Accordingly, even small imbalances would lead to large forces acting upon the rotating parts which have to be built to withstand the forces of the regular operation.

The rotor shaft might also be built as one component or as an assembly of several single components. Preferably, the rotor shaft is built as one single part, extending from one end of the rotor assembly to the other. In particular, the rotor shaft is provided for mounting the spinning rotor rotatably via at least one rotor shaft bearing to the housing. Advantageously, the rotor shaft is a rotational-symmetric component to avoid imbalances during rotation. The rotor shaft might have a constant diameter along its entire length. Preferably, the diameter in the middle of the rotor shaft and/or in a section between at least two, preferably between all rotor shaft bearings is larger than at the end sections of the rotor shaft, in particular the end for mounting the spinning rotor.

At least one rotor shaft bearing is provided for rotatably mounting the rotor shaft to the housing. Preferably, at least two rotor shaft bearings are arranged on the rotor shaft. More preferably, all rotor shaft bearings are identical to each other and/or are arranged at a distance to one another along the rotor shaft. Most preferably, no other part of the rotor assembly is mounted between two and in particular between all rotor shaft bearings on the rotor shaft. The rotor shaft bearings may be any kind of bearing, preferably however, the rotor shaft bearings are each a rolling bearing.

The divided housing is a housing provided to at least partially enclose the rotor assembly and is divided into at least two parts. The housing preferably encloses the rotor shaft at least between the spinning rotor and one rotor shaft bearing and/or between all rotor shaft bearings, in particular in an axial direction of the rotor shaft. Also preferably, the housing encloses the rotor shaft, the spinning rotor and/or the rotor shaft bearings along its full circumference. More preferably, at least the rotor shaft bearings and most preferably also the spinning rotor are fully enclosed by the housing along its full circumference and/or in an axial direction relative to the axis of rotation.

The housing comprises at least two sections, the rotor section and the bearing section, wherein the at least two single parts of the divided housing might extend over both sections or only one section of the housing. The rotor section at least surrounds the spinning rotor partially, preferably over the full circumference, as well as at least partially in an axial direction of the rotor shaft. Although the spinning rotor mounted on one end of the rotor shaft might partially protrude over an end of the housing, advantageously the spinning rotor is fully surrounded by the rotor section of the housing in an axial direction of the rotor shaft and/or along the circumference and/or in a radial direction of the spinning rotor. The bearing section encloses at least a part of the rotor shaft as well as at least one rotor shaft bearing, preferably all rotor shaft bearings and/or the section of the rotor shaft between all rotor shaft bearings. Preferably, the rotor section and the bearing section are arranged directly adjacent to one another.

In the bearing section and preferably only in the bearing section, the housing is divided into at least two, most preferably precisely two separate parts. Preferably, both parts are separated along a plane parallel to or arranged on the longitudinal axis of the rotor shaft. Advantageously, both parts of the housing are shaped so that the bearing section and/or a section of the housing for the rotor shaft arranged in the housing from one bearing to another bearing can be opened to easily insert the rotor assembly into the housing. Also preferably, a volume enclosed by the housing body and the housing cap in the bearing section has a cylindrical shape, wherein the diameter of this cylindrical bearing section is between 0.1 % and 5 % smaller than the outer diameter of the rotor shaft bearings or of the resilient mounting elements arranged on the outside of the rotor shaft bearings.

The two parts dividing at least the bearing section of the housing are a housing body as well as a housing cap. Preferably, the housing body at least partially forms the housing in the rotor section as well as in the bearing section. More preferably, the housing in the rotor section is exclusively built by the housing body, wherein the housing body might be made of a single part or several components. Most preferably, the housing body is just a single piece, at least in the bearing section. In particular prefered, the housing body encloses the rotor assembly over the full circumference in the rotor section and only over a part of the circumference in the bearing section, leaving a part of the housing in the bearing section open.

The housing cap is provided for closing the open part of the housing in the bearing section, preferably fully over the open part of the circumference. Preferably, the housing cap extends only over the bearing section and/or is not part of the rotor section. The housing cap might have any shape or size, but preferably, the housing cap has the shape of a half-cylinder. Further advantageously, the inner and/or outer diameter of the housing cap and of the part of the housing body closed by the housing cap are identical. Finally, a contact surface between the housing body and the housing cap is flat and/or straight and/or arranged in parallel to the rotational axis of the rotor arrangement.

According to the invention, the housing cap can be released and removed from the housing body to insert the rotor assembly into the housing. Afterwards, the rotor assembly is inserted into the opened housing, in particular into the housing body, from the front, that is, from the position of a spinning rotor of the installed rotor assembly in the housing, and/or in an axial direction of an installed rotor shaft of the rotor assembly. After inserting the rotor assembly into the opened housing and possibly after an optional alignment, in particular a precise alignment in an axial direction of the rotor assembly, the housing cap is closed, resulting in a press-fit connection of the rotor arrangement in the closed housing.

In a preferred embodiment of the divided housing, all rotor shaft bearings of the rotor assembly are arranged in the bearing section of the housing and/or the housing cap extends over the full length of the bearing section, so that the rotor assembly can be inserted into the housing easily when the housing cap is removed and the bearings of the rotor assembly can be firmly mounted by the housing cap, in particular by a press-fit, when the housing cap is closed.

The housing may be divided in any manner, however preferably the bearing section of the housing, in particular only the bearing section, is divided along a plane arranged through the longitudinal axis of the rotor shaft of the rotor assembly inside the housing. Even more prefered is a division of the bearing section of the housing into the housing body and the housing cap along a median longitudinal plane and/or along a plane through the middle or through the longitudinal axis of an opening of the housing for the rotor assembly. It is especially prefered that the bearing section of the housing is divided in the middle, the housing cap forming one half of the housing in the bearing section and the housing body forming the other half, allowing a particularly easy insertion of the rotor assembly into the opened housing and/or an especially uniform press-fit of the rotor assembly, in particular the rotor shaft bearings, in the closed housing.

It is further prefered that the rotor section of the housing is only formed by the housing body, especially preferably surrounding the spinning rotor of the installed rotor assembly over 360°. Also, preferably the housing body encloses the rotor assembly in the bearing section only over 180°. Surrounding over an angle means surrounding the part at least approximately, preferably at the most plus or minus 10° and more preferably precisely to this angle. Although the housing body might be made of one single part, advantageously a housing lid is arranged on one side of the housing body, preferably the side of the housing body opposite to the bearing section and/or to the housing cap. Especially preferably, the housing lid might be pivotally arranged at the housing body and/or provided for further protection of the spinning rotor. All parts of the housing surrounding or being arranged adjacent to the spinning rotor are advantageously not part of the housing cap.

To be able to access the spinning rotor during operation, in particular to transport fiber material or roving to the spinning rotor, and/or to drive the rotor assembly by a drive belt, the housing preferably has one opening in the rotor section and/or in the bearing section. The spinning rotor may be accessible through one of the openings and/or an end of the rotor shaft may be built as a belt roller protruding through the other of the openings. More preferably, both openings are arranged on opposing sides of the housing and/or both centers of the openings are arranged along one axis, in particular along the longitudinal axis of the housing and/or of the rotor shaft.

According to a prefered embodiment of the divided housing with a rotor assembly, the rotor assembly comprises at least one resilient mounting element for compensating vibrations of the rotor assembly, wherein advantageously each resilient mounting element is arranged between the rotor shaft bearing and the housing and/or in the bearing section, which advantageously still allows an easy mounting of the rotor assembly and at the same time further significantly reduces the vibrations and accordingly the wear of the rotor assembly. Each resilient mounting element is preferably a rubber ring and/or is arranged at the outer surface of the rotor shaft bearing. Particularly prefered, the resilient mounting element is surrounding the outer surface of the rotor shaft bearings over the full circumference. Most preferably, the resilient mounting element is arranged so that no direct contact between the rotor shaft bearings and the housing is possible and/or can occur even during strong vibrations of the rotor assembly.

To allow a particularly strong mounting of the rotor assembly in the housing, the diameter of the resilient mounting element is preferably larger than the diameter of the part of the housing accommodating the resilient mounting element, so that the resilient mounting element is compressed into a press-fit connection during closing of the housing cap. Preferably, the diameter of the resilient mounting element is between 0.1 % and 10 %, more preferably between 0.2 % and 5 % and most preferably between 0.5 % and 2 % larger than the diameter of the part of the housing accommodating the resilient mounting element. Accordingly, it is also prefered that the housing is provided to fix the rotor assembly by press-fit and/or a corresponding fitting tolerance between the resilient mounting element, in particular a rubber ring, and the housing, in particular the housing body from one side as well as the housing cap from the other side. In particular, the size and shape of the surface of the housing, especially in the bearing section and in particular of the housing body and/or the housing cap in the bearing section, is adapted to the outer surface of the rotor shaft bearings or the resilient mounting elements to allow a tight and flat fit of the surfaces.

To further improve the positioning accuracy as well as the fixed arrangement of the rotor assembly in the housing, the inner surface of the housing body and/or of the housing cap provided for fixing the rotor assembly in position comprises pins and/or rings protruding from the surface, in particular for a better axial fixing of the rotor assembly in connection with elastic and/or resilient mounting elements.

According to a prefered embodiment of the divided housing with a rotor assembly, in a contact area of the housing body and/or of the housing cap to be brought in contact with a corresponding contact area of the housing cap and/or of the housing body, at least one alignment pin, preferably at least one alignment pin per side, is provided, wherein in the corresponding contact area an alignment opening for the alignment pin is provided for a perfect alignment and/or to avoid axial movement of the housing cap relative to the housing body during closing of the housing, which might also lead to a change in the alignment of the rotor assembly inside the housing. Preferably, at least two pins are arranged each on one of the two contact areas, in particular one on a left and one on a right contact area, of the housing cap or of the housing body. Especially preferably, both alignment pins are arranged on opposing sides of the corresponding contact area, i.e. one alignment pin on a side of a first contact area towards the rotor section and the other alignment pin on the opposite side of the second contact area towards the end facing away from the rotor section. Also preferably, at least two alignment pins are arranged diagonally opposing one another each on one of the contact areas of the housing cap or of the housing body.

Although the housing cap might be fixed to the housing body by any known means for holding one part to another, the housing cap is advantageously fixed in position by at least one, preferably at least two and most preferably precisely two screws. It is additionally prefered that the crews are arranged at the ends of the contact areas, in particular where no alignment pin or alignment opening is arranged and/or opposing each an alignment pin relative to the middle of the housing and/or the middle of each contact area.

According to a prefered further development of the method, during closing the housing, the housing cap is applying pressure to a resilient mounting element arranged surrounding the outer surface of each of the rotor shaft bearings, compressing the resilient mounting element to a press-fit, which allows for an especially strong mounting of the rotor assembly as well as a good and even transmission of forces from the mounted rotor assembly to the housing. To further allow a very precise placement of the rotor arrangement in the housing, the axial positioning of the rotor assembly is aligned utilizing an adjustment jig after inserting the rotor assembly into the housing and before closing the housing cap.

These and other aspects of the invention will be apparent from and elucidated with reference to the embodiments described hereinafter.
- Fig. 1: shows a perspective view of a divided housing with a rotor assembly in an inserted, operational position;
- Fig. 2: shows a perspective view of a divided housing with a rotor assembly in an insertion position and an opened housing cap;
- Fig. 3: shows a schematic top view of a divided housing with a rotor assembly in an inserted position and with a removed housing cap;
- Fig. 4: shows a perspective view of a section of a housing body with a removed housing cap; and
- Fig. 5: shows a perspective view of a divided housing with a rotor assembly in an insertion position and an opened housing cap.

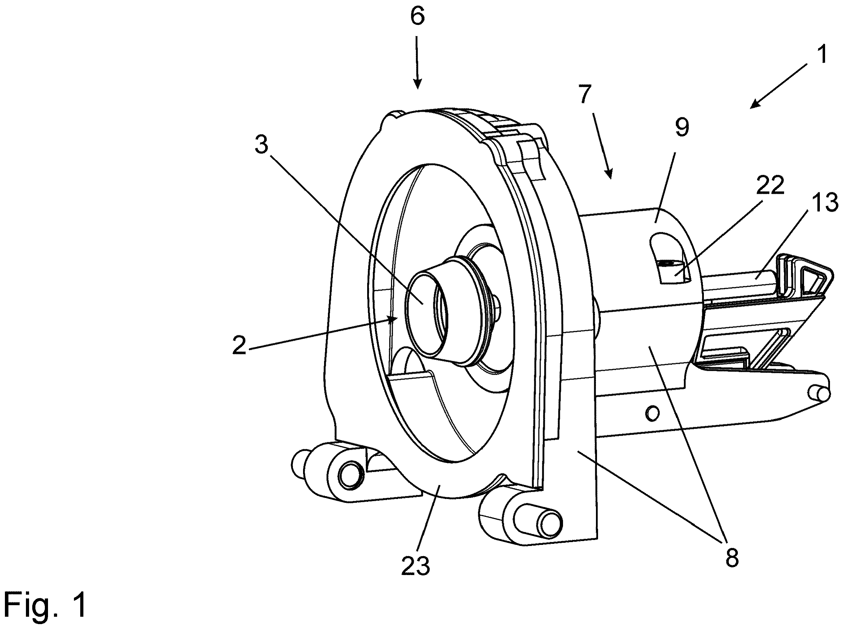

In a divided housing 1 of a spinning machine, a rotor assembly 2 is arranged as shown in figure 1. The housing 1 is built by a housing body 8 and a housing cap 7 fixed to the housing body 8 by screws 22. The housing 1 comprises two sections.

The first section is a rotor section 6 built by the housing body 8 as well as a housing lid 23, and the rotor section 6 is provided to enclose a spinning rotor 3 rotatably mounted to a rotor shaft 4. The housing lid 23 is pivotally mounted to the housing body 8 and can be opened to access the spinning rotor 3. The second section is a bearing section 7 built by the housing body 8 as well as by the housing cap 9. The bearing section 7 is provided for fixing the rotor shaft 4 via rotor shaft bearings 5 to the housing 1.

On an end of the rotor shaft 4 opposing the spinning rotor 3, the end section of the rotor shaft 4 is provided as a belt roller 13 for driving the spinning rotor 3 via the rotor shaft 4 by a drive belt of the spinning machine. Accordingly, the belt roller 13 is arranged outside of the housing 1.

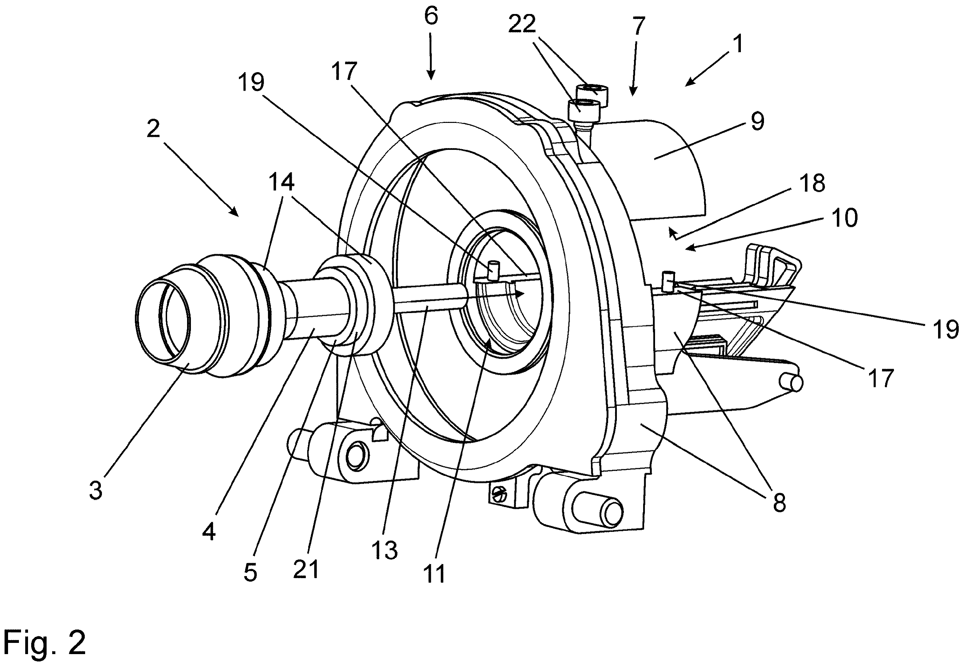

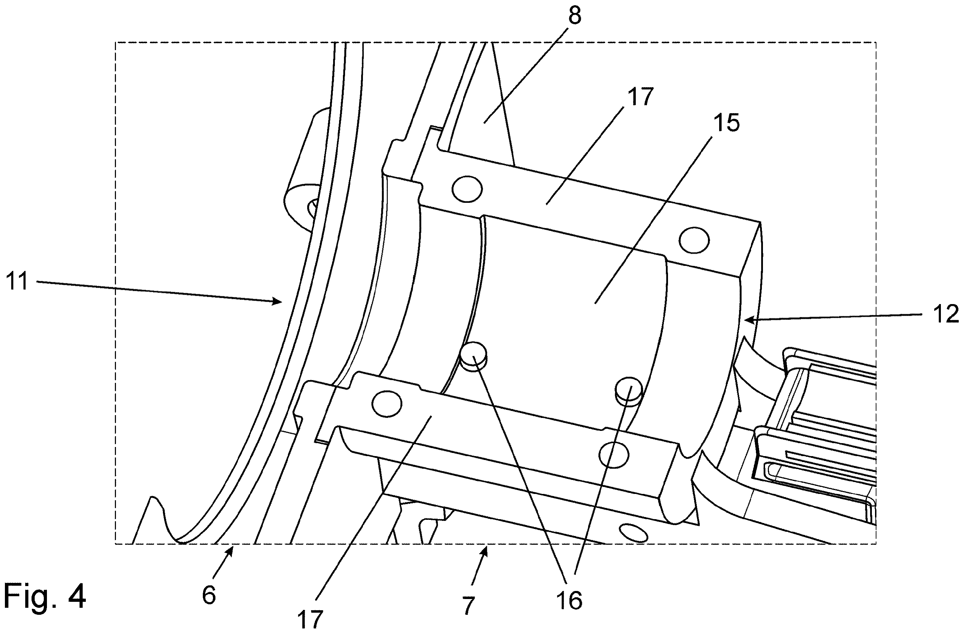

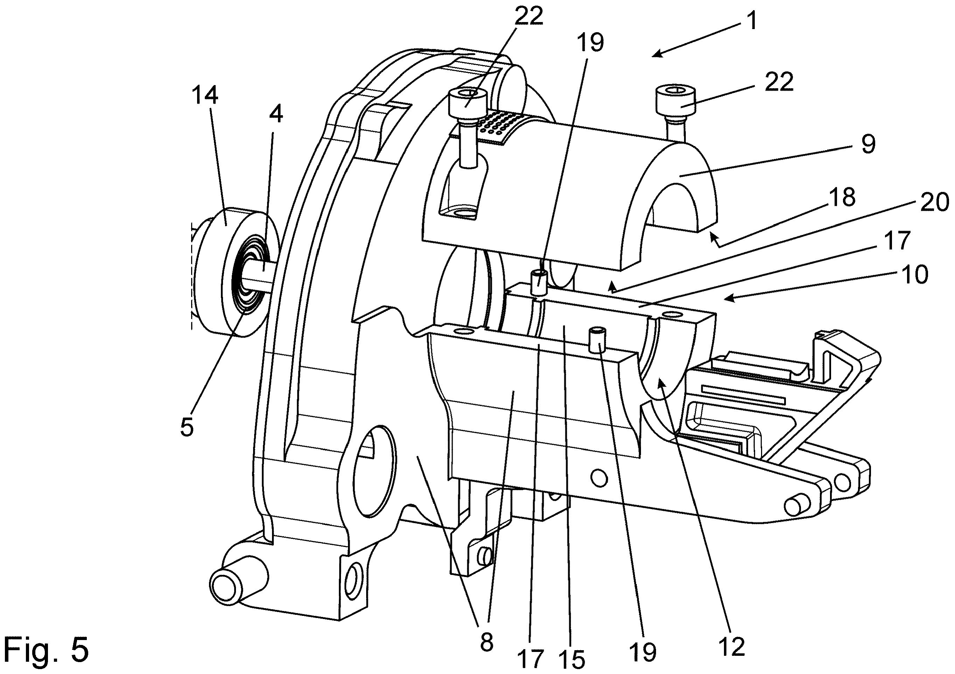

As shown in figure 2, the housing cap 9 has to be removed before inserting the rotor assembly 2 into the housing 1 and more precisely, into the housing body 8 with an open part 10 in the bearing section 7. The housing 1 has to be opened first, because the rotor assembly 2 is fixed into the closed housing 1 in a press-fit manner. To allow for such a press-fit arrangement, on the outer surface 21 of the rotor shaft bearings 5 an elastic rubber element is arranged as a resilient mounting element 14, which is slightly compressed during closing the housing cap 9. To allow an easy insertion of the rotor assembly 2, the housing 1 is divided in the bearing section 7 precisely in the middle, wherein both the inner surface 15 of the housing body 8 as well as the inner surface of the housing cap 9 have the shape of a half-cylinder (see figure 4 and 5).

The housing 1 has a cylindrical shape, wherein the rotor section 6 has a larger diameter than the bearing section 7. At one end of the housing 1 in the rotor section 6, a first opening 11 is provided for inserting the rotor assembly 2 into the housing 1 as well as to supply fiber material to the spinning rotor 3 during operation of the rotor spinning machine. On the other end of the housing 1, a second smaller opening 12 is provided to allow the end of the rotor shaft 4 comprising the belt roller 13 to protrude from the housing 1 and to interact, in particular to be driven, by a drive belt.

To be able to precisely align the rotor assembly 2 in the housing 1, in particular in the bearing section 6 of the housing 1, two pins 16 are arranged protruding from the inner surface 15 of the housing body 8 (see figure 4). After inserting the rotor assembly 2 into the housing 1, the rotor assembly 2 is aligned, in particular with regard to the axial direction of the rotor shaft 4, utilizing an adjustment jig. When closing the housing cap 9, the pins 16 exert a particularly high pressure on the surface of the rotor assembly 2 and prevent any further movement, in particular shifting along the axial direction or rotation along the rotational axis. To allow an easy insertion as well as alignment of the rotor assembly 2, the rotor assembly 2 and the inside of the housing 1 are built with a rotational symmetry.

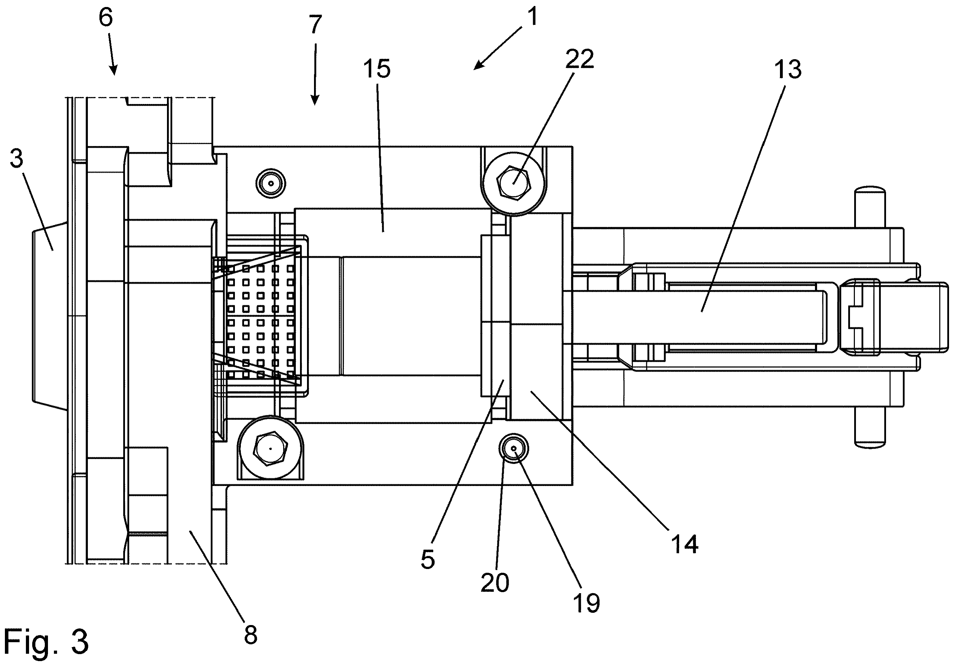

To ensure a safe alignment of the housing cap 9 to the housing body 8 as well as to avoid any rotation of the housing cap 8 during closing the housing 1, on the contact areas 17 of the housing body 8 to be brought in contact with the contact areas 18 of the housing cap 9 when closing the housing 1, two alignment pins 19 are provided (see figure 3). Each of the alignment pins 19 is arranged on one contact area 17 of the housing body 8, diagonally opposing one another. In the contact areas 18 of the housing cap 9, in corresponding positions alignment openings 20 are arranged for receiving the alignments pins 19. To close the housing 1, the housing cap 9 is first placed on the housing body 8 so that the alignment pins 19 are arranged inside the alignment openings 20 of the housing body 8. Afterwards, the crews 22 are inserted and tightened.

### List of reference signs

- 1: Divided housing
- 2: rotor assembly
- 3: spinning rotor
- 4: rotor shaft
- 5: rotor shaft bearing
- 6: rotor section
- 7: bearing section
- 8: housing body
- 9: housing cap
- 10: open part
- 11: first opening
- 12: second opening
- 13: belt roller
- 14: resilient mounting element
- 15: inner surface
- 16: pin
- 17: contact area
- 18: corresponding contact area
- 19: alignment pin
- 20: alignment opening
- 21: outer surface
- 22: screw
- 23: housing lid

## Claims

1. Divided housing (1) with a rotor assembly (2) of a rotor spinning machine, wherein
- the rotor assembly (2) comprises a spinning rotor (3), a rotor shaft (4) and at least one rotor shaft bearing (5) and wherein
- the housing (1) comprises a rotor section (6) and a bearing section (7), the rotor section (6) surrounding the spinning rotor (3) and the bearing section (7) enclosing at least a part of the rotor shaft (4) as well as at least one rotor shaft bearing (5),
**characterized in that**
- in the bearing section (7) the housing (1) is at least partially divided parallel to a longitudinal housing axis into two separate parts,
- the first part being a housing body (8) extending over the rotor section (6) as well as the bearing section (7) and
- the second part being a housing cap (9) closing an open part (10) of the housing body (8) in the bearing section (7).

2. Divided housing according to claim 1, **characterized in that** all rotor shaft bearings (5) of the rotor assembly (2) are arranged in the bearing section (7) of the housing (1) and/or that the housing cap (9) extends over the full length of the bearing section (7).

3. Divided housing according to claim 1 or 2, **characterized in that** the bearing section (7) of the housing (1) is divided along a plane arranged through the longitudinal axis of the rotor shaft (4) inside the housing (1).

4. Divided housing according to at least one of the proceeding claims, **characterized in that** the bearing section (7) of the housing (1) is divided in the middle, the housing cap (9) forming one half of the housing (1) in the bearing section (7) and the housing body (8) forming the other half.

5. Divided housing according to at least one of the proceeding claims, **characterized in that** the rotor section (6) of the housing (1) is only formed by the housing body (8), surrounding the spinning rotor (3) of the installed rotor assembly (2) over 360° and/or the housing body (8) encloses the rotor assembly (2) in the bearing section (7) only over 180°.

6. Divided housing according to at least one of the proceeding claims, **characterized in that** the housing (1) has one opening (11, 12) in each of the rotor section (6) and of the bearing section (7), the spinning rotor (3) being accessible through one of the openings (11) and/or an end of the rotor shaft (4) is built as a belt roller (13) protruding through the other of the openings (12).

7. Divided housing according to at least one of the proceeding claims, **characterized in that** the rotor assembly (2) comprises at least one resilient mounting element (14) for compensating vibrations of the rotor assembly (2), wherein each resilient mounting element (14) is arranged between the rotor shaft bearing (5) and the housing (1) in the bearing section (7).

8. Divided housing according to at least one of the proceeding claims, **characterized in that** the diameter of the resilient mounting element (14) is larger than the diameter of the part of the housing (1) accommodating the resilient mounting element (14), so that the resilient mounting element (14) is compressed into a press-fit during closing of the housing cap (9).

9. Divided housing according to at least one of the proceeding claims, **characterized in that** the housing (1) is provided to fix the rotor assembly (2) by press-fit between the resilient mounting element (14) and the housing body (8) from one side as well as the housing cap (9) from the other side.

10. Divided housing according to at least one of the proceeding claims, **characterized in that** the inner surface (15) of the housing body (8) and/or of the housing cap (9) provided for fixing the rotor assembly (2) in position comprises pins (16) and/or rings protruding from the surface (15) for precise and firm axial positioning of the rotor assembly (2).

11. Divided housing according to at least one of the proceeding claims, **characterized in that** in a contact area (17) of the housing body (8) and/or the housing cap (9) to be brought in contact with a corresponding contact area (18) of the housing cap (9) and/or the housing body (8) at least one alignment pin (19) per side is provided, wherein in the corresponding contact area (18) an alignment opening (20) for the alignment pin (19) is provided.

12. Method for installing a rotor assembly (2) in a housing (1) of a rotor spinning machine, wherein the rotor assembly (2) comprises a spinning rotor (3), a rotor shaft (4) and at least one rotor shaft bearing (5) and wherein the housing (1) comprises a rotor section (6) and a bearing section (7), the rotor section (6) surrounding the spinning rotor (3) and the bearing section (7) enclosing at least a part of the rotor shaft (4) as well as at least one rotor shaft bearing (5), with the steps:
- Opening the housing (1) by removing a housing cap (9) from a housing body (8), wherein the housing cap (9) is at least partially dividing the housing (1) in the bearing section (7) parallel to a longitudinal housing axis into two separate parts,
- Inserting the rotor assembly (2) into the opened housing (1) in an axial direction of an installed rotor shaft (4) of the rotor assembly (2), and
- Closing the housing cap (9) and press-fitting the rotor assembly (2) in the housing (1) between the housing body (8) and the housing cap (9) in the bearing section (7).

13. Method according to claim 12, **characterized in that** during closing the housing (1), the housing cap (9) is applying pressure to a resilient mounting element (14) arranged surrounding the outer surface (21) of each of the rotor shaft bearings (5), compressing the resilient mounting element (14) to a press-fit with the housing (1).

14. Method according to claim 12 or 13, **characterized in that** the axial positioning of the rotor assembly (2) is aligned utilizing an adjustment jig after inserting the rotor assembly (2) into the housing (1) and before closing the housing cap (9).

15. Rotor spinning machine with at least one, preferably many identical spinboxes each comprising a divided housing (1) according to one of the claims 1 - 11.
